# EUROPEAN PATENT SPECIFICATION

(11) **EP 3 668 753 B1**
(45) Date of publication and mention of the grant of the patent: **06.12.2023**
(21) Application number: 18762156.0
(22) Date of filing: 20.08.2018
(51) Int. Cl.: G10K 7/00, B60Q 5/00, B66F 9/24, G10K 9/12, B60R 21/34

(54) **A DEVICE FOR OPERATING A SOUNDER TO PRODUCE A PLURALITY OF DIFFERENT SOUNDS, AND A METHOD FOR OPERATING A SOUNDER TO PRODUCE A PLURALITY OF DIFFERENT SOUNDS**
VORRICHTUNG ZUM BETRIEB EINES KLANGGERÄTES ZUR ERZEUGUNG EINER VIELZAHL VERSCHIEDENER KLÄNGE, UND VERFAHREN ZUM BETRIEB EINES KLANGGERÄTES ZUR ERZEUGUNG EINER VIELZAHL VERSCHIEDENER KLÄNGE
DISPOSITIF PERMETTANT D'ACTIONNER UNE SIRÈNE POUR PRODUIRE UNE PLURALITÉ DE SONS DIFFÉRENTS, ET PROCÉDÉ D'ACTIONNEMENT D'UNE SIRÈNE POUR PRODUIRE UNE PLURALITÉ DE SONS DIFFÉRENTS

(30) Priority: 18.08.2017 IE S20170168
(43) Date of publication of application: 24.06.2020
(73) Proprietor: Hegarty, David, Drombanna Limerick (IE); Hegarty, John, Drombanna Limerick (IE)
(72) Inventor: HEGARTY, John, County Limerick (IE); HEGARTY, David, County Limerick (IE); QUINLAN, Michael, County Limerick (IE)
(74) Representative: Gorman, Francis Fergus
(86) International application number: PCT/IE2018/000009
(87) International publication number: WO 2019/035110

(56) References cited:
- WO-A1-94/26555
- GB-A- 1 399 365
- JP-A- 2007 112 347
- KR-A- 20170 016 902
- US-A1- 2007 146 123
- US-A1- 2009 146 799
- US-A1- 2016 379 621

## Description

The present invention relates to a device for operating a sounder to produce a plurality of different sounds, and the invention also relates to a method for operating a sounder to produce a plurality of different sounds. In particular, the invention relates to a device and a method for operating a sounder of a vehicle to produce a plurality of different sounds, for example, a plurality of different alarm sounds to indicate movement of the vehicle, and in particular, to indicate reversing of the vehicle. However, it is to be understood that the invention is not limited to a device and a method for operating a sounder in response to reversing of a vehicle, the device and the method may be provided for operating a sounder of a vehicle in response to any movement or intended movement of the vehicle, or in response to the detection of a person or an object in proximity to the vehicle. The invention also relates to a vehicle alarm system and to a vehicle comprising the vehicle alarm system.

Forklift trucks, delivery trucks, articulated trucks and the like, as well as vans which in general have a blind spot to the rear of the truck when reversing, in general are fitted with a reversing alarm system. The reversing alarm system activates a sounder, for example, a horn or a siren to produce an audible warning alarm sound in order to warn individuals in the reversing path of the truck and near the reversing path of the truck of the fact that the truck is reversing. The sounder, such as the horn or siren of the truck is activated in response to an activation signal. The activation signal, in general, is derived from a signal indicative of reverse gear in a gearbox of the truck being engaged, or in the case of an electrically powered truck the activation signal is derived from a reverse switch of the truck being operated to cause the truck to reverse. Alternatively, the activating signal may be derived from the reversing motion of the truck. Each time the horn or siren is activated by the activation signal, the horn or siren produces a similar warning alarm sound, for example, a single tone sound lasting approximately 0.5 seconds and repeated every second. A disadvantage of this is that on hearing a similar sound over an extended period of time an individual becomes immune to such sound, and thus, the sound produced by such a horn or siren in response to an activation signal rapidly loses its warning or alerting effect. This is particularly so in the case of a forklift truck which is frequently, if not continuously, operating in a relatively confined space, such as for example, in a warehouse or the like. Once an individual has become immune to the sound of the warning alarm of a reversing vehicle, unknowingly that individual could stray into the reversing path of such a vehicle, without even noticing the warning alarm sound, with serious, if not fatal consequences. This, is undesirable.

There is therefore a need for a vehicle alarm system which addresses this problem.

U.S. Published Patent Application Specification No. 2009/0146799 of Goldstein et al. discloses an adaptive backup alarm system and a method for producing an alarm signal for applying to a sounder or loudspeaker of a vehicle, when the vehicle is reversing, and to modify the alarm signal in response to the velocity of the vehicle and the ambient sound level in the area in which the vehicle is operating.

PCT Specification No. WO 94/26555 of Turlais et al. discloses a system for using the horns of a vehicle to also produce signals indicative of the vehicle being operated in a reverse mode.

The present invention is directed towards providing such a vehicle alarm system, and the invention is also directed towards a method for producing an alarm signal in a vehicle. Additionally, the invention is directed towards providing a device for operating a sounder to produce a plurality of different alarm sounds, and the invention is also directed towards a method for operating a sounder to produce a plurality of different sounds. Further, the invention is directed towards a vehicle comprising the vehicle alarm system.

According to the invention there is provided a vehicle alarm system comprising a device for operating a sounder to produce a plurality of different alarm sounds, the device comprising a means to provide a plurality of selectable discrete signal trains configured for applying to the sounder to operate the sounder to produce respective different alarm sounds, each discrete signal train being configured so that when that discrete signal train is applied to the sounder, the sound pattern of the alarm sound produced by the sounder is different to the sound patterns of the alarm sounds produced by the sounder when the other ones of the respective discrete signal trains are applied to the sounder, a selector configured to select the discrete signal trains for applying to the sounder, and a control means responsive to each occurrence of an activation signal derived from one of commencement of movement of the vehicle, engagement of a drive gear of the vehicle, activation of a drive switch of the vehicle, and detection of a person or object in or near the path of traverse of the vehicle, to operate the selector to select the discrete signal trains and to apply the selected discrete signal train to the sounder, wherein a storing means stores the plurality of the selectable discrete signal trains in the form of selectable discrete data signals cross-referenced with respective unique identifier codes for facilitating selection of the respective discrete data signals, and the selector is configured to select the discrete data signal from the storing means to be applied to the sounder in one of a predefined order and a random order.

Advantageously, the sound pattern of the alarm sound produced by the sounder in response to at least one of the discrete signal trains is determined by the frequency of the discrete signal train. Preferably, at least one of the discrete signal trains comprises a frequency signal, the frequency of the discrete signal train varying with respect to time. Advantageously, the sound pattern of the alarm sound produced by the sounder in response to at least one of the discrete signal trains is determined by the amplitude of the discrete signal train.

Preferably, at least one of the discrete signal trains comprises an amplitude signal, the amplitude of the discrete signal train varying with respect to time.

In one aspect of the invention the sound pattern of the alarm sound produced by the sounder in response to at least one of the discrete signal trains is determined by a combination of the frequency and the amplitude of the discrete signal train.

In another aspect of the invention the control means is configured to apply at least one of the discrete signal trains to the sounder while the activation signal remains in an active state indicative of one of the movement of the vehicle, engagement of a drive gear of the vehicle, activation of a drive switch of the vehicle and detection of a person or object in or near the path of traverse of the vehicle.

Preferably, the control means is configured to repeatedly apply the same discrete signal train to the sounder while the activation signal is in the active state.

Alternatively, the control means is configured to operate the selector for sequentially selecting respective different ones of the discrete signal trains for sequentially applying the selected discrete signal trains to the sounder in the selected order while the activation signal is in the active state.

Preferably, the control means is configured to time a pause of predefined time duration between the sequential application of the one or ones of the discrete signal trains to the sounder while the activation signal is in the active state. Preferably, the predefined time duration of the pause lies in the range of 0.25 seconds to 2 seconds. Advantageously, the predefined time duration of the pause lies in the range of 0.5 seconds to 1.5 seconds. Ideally, the predefined time duration of the pause is approximately 1 second.

In one aspect of the invention each discrete signal train is configured to produce an alarm sound when applied to the sounder of time duration lying in the range of 0.5 seconds to 5 seconds. Preferably, each discrete signal train is configured to produce an alarm sound when applied to the sounder of time duration lying in the range of 1 second to 5 seconds, and advantageously, in the range of 2 seconds to 4 seconds. Ideally, each discrete signal train is configured to produce an alarm sound when applied to the sounder of time duration of approximately 3 seconds.

In one aspect of the invention at least ten discrete signal trains are provided.

In another aspect of the invention at least twenty discrete signal trains are provided.

In a further aspect of the invention at least fifty discrete signal trains are provided. Preferably, at least one hundred discrete signal trains are provided. Advantageously, at least two hundred discrete signal trains are provided. Ideally, at least three hundred discrete signal trains are provided.

In one aspect of the invention overthree hundred signal trains are provided.

Preferably, each discrete signal train comprises a discrete digital data signal.

Advantageously, the storing means is configured to store the selectable discrete signal trains as selectable discrete digital data signals.

In one aspect of the invention the storing means comprises a digital data storing element.

In another aspect of the invention the storing means comprises a secure digital (SD) card on which the respective selectable discrete data signals are stored. Preferably, the SD card is replaceable. Advantageously, the SD card comprises a micro-SD card.

In another aspect of the invention a decoder is provided for decoding the selectable discrete data signals, and to convert the selectable discrete data signals to analogue form for applying to the sounder. Preferably, the decoder comprises an MP3 decoder.

Preferably, the unique identifier codes cross-referenced with the respective selectable discrete data signals comprise respective consecutive numbers, and preferably, the consecutive numbers are from the number one upwards. Advantageously, the discrete digital data signals are numbered consecutively in a numbering sequence corresponding to their respective locations in the storing means, and preferably, are identified by their respective locations in the storing means.

In one aspect of the invention the selector is configured to select the discrete signal trains in the order in which the signal trains are stored.

In a further aspect of the invention the selector comprises a pseudo-random number generator, and the selector is configured to select the discrete signal trains corresponding to the respective random numbers generated.

In another aspect of the invention the control means is responsive to the activation signal to operate the pseudo-random number generator to generate a random number. Preferably, the random numbers generated lie in the range of one upwards to the maximum number of the discrete signal trains provided.

In one aspect of the invention an interface means is provided for selecting the order by which the discrete signal trains are selected.

In another aspect of the invention the interface means is configured for manual data entry.

In a further aspect of the invention a power amplifier is provided for amplifying each discrete signal train prior to being applied to the sounder.

In a still further aspect of the invention the control means comprises a signal processor.

Preferably, the signal processor comprises a microprocessor.

In another aspect of the invention the device comprises the sounder.

In another aspect of the invention the activation signal is derived from a signal indicative of commencement of movement of the vehicle in one of a forward direction and a reversing direction.

In a further aspect of the invention the activation signal is derived from a signal indicative of the engagement of one of a forward gear and a reverse gear of the vehicle.

In a further aspect of the invention the activation signal is derived from a signal indicative of the activation of one of a forward switch and a reverse switch of the vehicle.

In a still further aspect of the invention the activation signal is derived from a signal indicative of the presence of a person or object in the path or near the path of traverse of the vehicle.

In one aspect of the invention the device comprises a monitoring means for producing the activation signal.

Preferably, the monitoring means is responsive to at least one of the signals indicative of one of commencement of movement of the vehicle, engagement of a drive gear of the vehicle, activation of a drive switch of the vehicle, and detection of a person or object in or near the path of traverse of the vehicle for producing the activation signal.

In one aspect of the invention the monitoring means comprises a motion sensor.

In another aspect of the invention the monitoring means comprises one of a current and a voltage sensor configured to detect power in a reversing light circuit of the vehicle.

In a further aspect of the invention the monitoring means comprises a sensor for monitoring selection of one of a forward and a reverse gear in a gearbox of the vehicle.

In a still further aspect of the invention the monitoring means comprises a sensor for monitoring one of the activation of a forward movement switch and a reverse movement switch of the vehicle.

In another aspect of the invention the monitoring means is responsive to a signal produced by a proximity sensor located on the vehicle indicative of detection of the presence of an individual or object in or near the path of traverse of the vehicle.

In a further aspect of the invention the monitoring means comprises a proximity sensor configured for detecting the presence of an individual or object in or near the path of traverse of the vehicle.

In one aspect of the invention the proximity sensor comprises one of a radar sensor and a forward looking infrared radiometer (FLIR) sensor.

In one aspect of the invention the alarm sounder comprises an alarm sounder of the vehicle.

In another aspect of the invention the vehicle alarm system comprises the alarm sounder.

In a further aspect of the invention the alarm sounder comprises a sounder configured to operate within a normal human audio frequency bandwidth.

Further the invention provides a vehicle comprising a vehicle alarm system according to the invention.

In one aspect of the invention the vehicle comprises a ground vehicle.

In another aspect of the invention the vehicle comprises a forklift truck.

Additionally, the invention provides a method as recited in claim 12 for operating a sounder of a vehicle alarm system to produce a plurality of different alarm sounds.

In one aspect of the invention the discrete signal trains are selected in the order by which they are stored.

The advantages of the invention are many. A particularly important advantage of the invention is that by virtue of the fact that each time the sounder of the vehicle is activated in response to the one of movement of the vehicle, engagement of a forward or reverse gear of the vehicle, activation of a drive switch of the vehicle and the detection of an individual or object in or near the path of traverse of the vehicle, the sounder produces an alarm signal, the sound pattern of which is different to the sound pattern of the previously produced alarm signal, and is also different to the sound pattern of many of the previously produced alarm signals. This, has the advantage that people working in close proximity to the vehicle over extended periods of time do not become so familiar with the sound of the alarm signal to become immune to the signal.

The invention will be more clearly understood from the following description of some preferred embodiments thereof, which are given by way of example only with reference to the accompanying drawing, in which:
Fig. 1 is a block representation of a vehicle according to the invention comprising a vehicle alarm system also according to the invention, and
Fig. 2 is a block representation of a vehicle alarm system according to another embodiment of the invention.

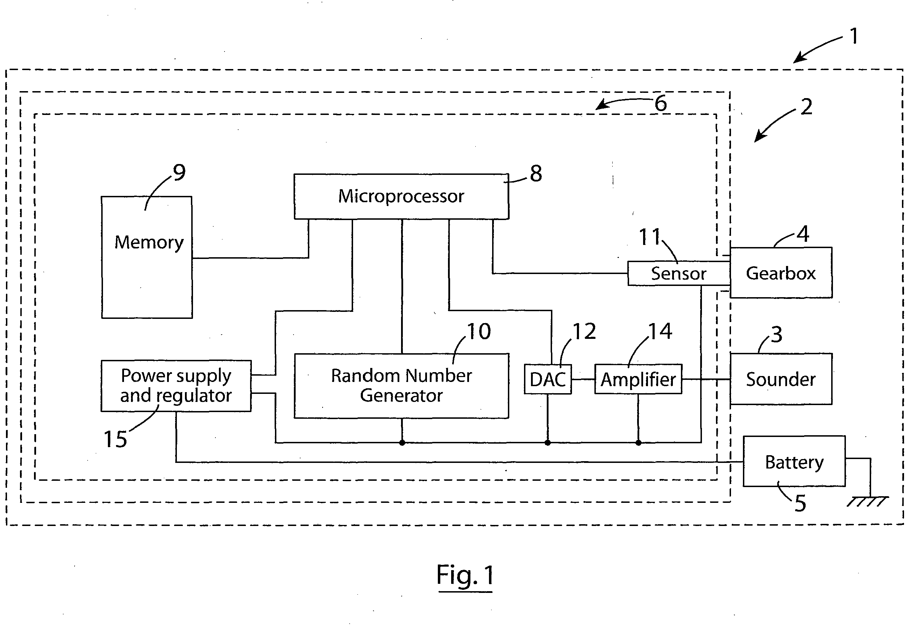

Referring to the drawings and initially to Fig. 1 thereof, there is illustrated a vehicle according to the invention, which in this embodiment of the invention is a ground vehicle indicated generally by the reference numeral 1. The vehicle 1 may be any ground vehicle, for example, a forklift truck, a delivery truck, an articulated truck, a van, or indeed any other such road or ground vehicles. In this embodiment of the invention the vehicle 1 is a forklift truck, and since such forklift trucks will be well known to those skilled in the art, the forklift truck is illustrated in broken lines in block representation only in Fig. 1, and only those parts of the forklift truck which are relevant to the invention are illustrated. A vehicle alarm system also according to the invention and indicated generally by the reference numeral 2 is provided on the vehicle 1 for producing an audible alarm signal in response to movement of the vehicle 1, and in particular, though not limited to reversing movement of the vehicle 1. The vehicle alarm system 2 comprises a sounder 3 which is mounted on the vehicle 1 for producing the alarm signal.

Turning initially to the vehicle 1, the vehicle 1 comprises a gearbox 4 which allows forward gears and one or more reverse gears to be selected for driving the vehicle 1 forwardly or for reversing the vehicle, respectively. A battery 5, which typically is a six volt, a twelve volt or a twenty-four volt battery powers the electrical system (not shown) of the vehicle 1, and may also be provided to power the vehicle in the event of the vehicle being an electrically powered vehicle as opposed to a vehicle powered by an internal combustion engine.

Turning now to the vehicle alarm system 2, the vehicle alarm system 2 comprises a device also according to the invention and indicated generally by the reference numeral 6 for operating the sounder 3 to produce, in this embodiment of the invention, randomly selectable different alarm sounds in a normal human audio frequency range in response to an activation signal as will be described below. The device 6 comprises a control means, in this embodiment of the invention provided by a signal processor, namely, a microprocessor 8 which controls the operation of the device 6 and also the operation of the sounder 3 for producing the alarm sounds.

A means to provide a plurality of discrete signal trains, which are configured for applying to the sounder 3 in order to operate the sounder 3 to produce the respective different alarm sounds, comprises a storing means, in this embodiment of the invention, an electronic memory 9, for example, a digital memory, such as a random access memory or a read only memory in which the plurality of the selectable discrete signal trains are stored. The discrete signal trains are stored in the memory 9 as selectable discrete digital data signals, and in this case two hundred discrete digital data signals are stored in the memory 9 in digital form, and are identified by respective unique identifier codes for facilitating selection thereof. The unique identifier codes in this embodiment of the invention are provided by numbers, and in this case, the two hundred selectable discrete digital data signals are identified by the numbers 1 to 200 respectively. Each of the two hundred selectable discrete digital data signals are different from each other, and are configured so that each discrete digital data signal when applied to the sounder 3 produces an alarm sound, the sound pattern of which is different to the sound patterns of the respective alarm sounds produced by the other discrete digital data signals when applied to the sounder 3.

A pseudo-random number generator 10 in the device 6 is operated under the control of the microprocessor 8 for randomly generating numbers from 1 to 200 inclusive for facilitating random selection of the discrete digital data signals stored in the memory 9.

A monitoring means responsive, in this embodiment of the invention, to a forward gear or a reverse gear being selected in the gearbox 4 for producing the activation signal comprises a sensor 11. The sensor 11 is located in or on the gearbox 4 of the vehicle 1 and monitors the state of the gearbox 4, and in this embodiment of the invention is configured to produce the activation signal in response to a reverse gear being selected in the gearbox 4.

The microprocessor 8 is configured to read the signals from the sensor 11, and on detecting the activation single being, in this case indicative of reverse gear being selected, the microprocessor 8 operates the pseudo-random number generator 10 to generate a random number. The microprocessor 8 selects the discrete digital data signal from the memory 9, the unique identifier code number of which corresponds with the random number generated by the pseudo-random number generator 10.

The microprocessor 8 is configured to apply the selected discrete digital data signal to a decoder 12, in this embodiment of the invention a digital-to-analogue converter 12, in order to convert the discrete digital data signal into an analogue signal. The analogue signal from the digital-to-analogue converter 12 is then applied through a power amplifier 14 to the sounder 3. The microcontroller 8 in this embodiment of the invention repeatedly applies the selected discrete digital data signal to the sounder 3 through the digital-to-analogue converter 12 and the amplifier 14 for so long as the activation signal from the sensor 11 remains active. In other words, the microcontroller 8 repeatedly applies the selected discrete digital data signal to the sounder 3 for so long as the activation signal remains indicative of reverse gear remaining selected in the gearbox 4 of the vehicle 1. The repeated application of the selected discrete digital data signal to the sounder 3 is controlled by the microprocessor 8 so that between each application of the discrete digital data signal to the sounder 3 a pause of a predefined time duration is provided. Typically, the predefined time duration of the pause between the application of each repetition of the selected discrete digital data signal to the sounder 3 is approximately 1 second, but may range from 0.25 seconds to 2 seconds. In this embodiment of the invention the duration of each alarm sound produced by the sounder 3 in response to the application of each of the discrete digital data signals lies in the range of 0.5 seconds to 5 seconds, and more typically, the duration of each alarm sound produced by the sounder 3 in response to the application of each discrete digital data signal lies in the range of 2 seconds to 4 seconds. The duration of the alarm sounds produced by the sounder 3 in response to the application of the respective discrete digital data signals may be the same or different. The selected discrete digital data signal is repeatedly applied to the sounder 3 so that the sounder 3 is effectively silent during the pause of the predefined time duration.

A power supply 15 is provided in the device 6 for powering the microprocessor 8, the pseudo-random number generator 10, the digital-to-analogue converter 12, the amplifier 14 and the sensor 11. The power supply 15 derives its power from the battery 5 of the vehicle 1, and produces a voltage regulated power supply.

Each discrete digital data signal when applied to the sounder 3 produces an alarm sound of a distinctive sound pattern, which is different to the sound patterns of the alarm sounds produced by the sounder 3 when the other ones of the respective discrete digital data signals are applied to the sounder 3. The discrete digital data signals comprise frequency and amplitude components, with the frequency components and the amplitude components of the discrete digital data signals varying with time. The variation of the frequency and amplitude components is such that no two discrete digital data signals when applied to the sounder 3 produce an alarm sound with the same sound pattern.

In use, with the vehicle alarm system 2 mounted on the vehicle 1 and powered from the battery 5 of the vehicle 1, and with the sounder 3 mounted on the vehicle 1, and the sensor 11 coupled to the gearbox 4 of the vehicle 1 for monitoring the selection of a reverse gear in the gearbox 4, the vehicle alarm system 2 and the vehicle 1 are ready for use. The microprocessor 8 reads signals from the sensor 11. On the sensor 11 detecting a reverse gear being selected in the gearbox 4, the sensor produces the activation signal. On detecting the activation signal from the sensor 11, the microprocessor 8 operates the pseudo-random number generator 10 to generate a random number between the numbers 1 and 200, inclusive. The microprocessor 8 then selects the discrete digital data signal stored in the memory 9 under the number corresponding to the generated random number. The microprocessor 8 then applies the selected discrete digital data signal to the sounder 3 through the digital-to-analogue converter 12 and the amplifier 14. The microprocessor 8 continues to repeatedly apply the selected discrete digital data signal to the sounder 3 with a pause of the predefined time duration between each application thereof until the activation signal read from the sensor 11 is no longer in the active state, thus indicating that the reverse gear has been deselected in the gearbox 4. On the activation signal read from the sensor 11 no longer being active, the microprocessor 8 terminates the application of the selected discrete digital data signal to the sounder 3, thereby deactivating the sounder 3.

On the microprocessor 8 next detecting the activation signal from the sensor 11 being in the active state, the microprocessor 8 again activates the pseudo-random number generator 10 to generate another random number. On reading the newly generated random number from the pseudo-random number generator 10, the microprocessor 8 selects the stored discrete digital data signal from the memory 9, the unique identifier code of which corresponds with the random number just generated by the pseudo-random number generator 10. The microprocessor 8 then applies the newly selected discrete digital data signal to the sounder 3 through the digital-to-analogue converter 12 and in turn the amplifier 14 to activate the sounder 3 to again generate an alarm sound, which will be of sound pattern different to the sound pattern of the previously generated alarm sound and many previously generated alarm sounds, assuming of course that the random number generated by the pseudo-random number generator is different to the immediately previously generated random numbers.

Accordingly, each time reverse gear is selected in the gearbox 4, the sounder 3 produces an alarm sound of a sound pattern different to the sound pattern of the alarm signal produced by the sounder on the previous and in general many previous engagements of a reverse gear in the gearbox 4. Therefore, there is little or no danger of individuals in the vicinity of the vehicle becoming accustomed to the sounds produced by the sounder 3 to the extent as to become immune to the sounds.

It is also envisaged that the vehicle 1 may be provided with a proximity sensor, for example, a radar sensor or a FLIR sensor located to the rear and/or the front of the vehicle 1, which would monitor for individuals or objects in the path of traverse of the vehicle, be it a forward or a reversing path. The microprocessor 8 would be configured to read signals from the proximity sensor, and on the signal read from the proximity sensor being indicative of an individual or an object being detected in or near the path of traverse of the vehicle, the microprocessor 8 would again operate the pseudo-random number generator 10 to generate a random number, and in turn to select the discrete digital data signal from the memory 9 corresponding to the generated random number, and would then apply the selected discrete digital data signal to the sounder 3 through the digital-to-analogue converter 12 and in turn the amplifier 14 as already described in order to produce a repeating alarm sound until the signal read from the proximity sensor is no longer indicative of the individual or obstruction being in or near the path of traverse of the vehicle.

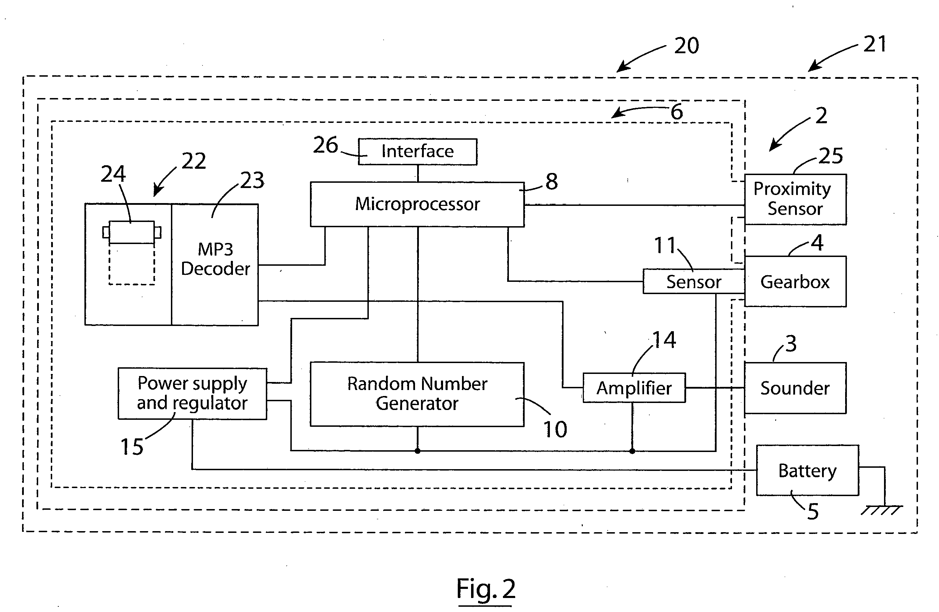

Referring now to Fig. 2 there is illustrated a vehicle alarm system according to another embodiment of the invention indicated generally by the reference numeral 20 mounted on a vehicle, for example, a forklift truck, a delivery truck, a articulated truck, a van or any other such road or ground vehicle for producing an audible alarm signal for alerting to movement of the vehicle, for example, reverse movement of the vehicle, although needless to say the vehicle alarm system 20 may be configured for producing the audible alarm signal in response to either forward or reverse movement of the vehicle, and also for producing an audible alarm signal on detection of an individual or obstruction in or near the path of traverse of the vehicle. The vehicle is also according to the invention and is indicated generally by the reference numeral 21. The components of the vehicle 21 are similar to those of the vehicle 1 and similar components are identified by the same reference numerals.

Turning now to the vehicle alarm system 20, the vehicle alarm system 20 is substantially similar to the vehicle alarm system 2 described with reference to Fig. 1, and similar components are identified by the same reference numerals. The main difference between the vehicle alarm system 20 and the vehicle alarm system 2 lies in the storing means for storing the selectable discrete signal trains for applying to the sounder 3. In this embodiment of the invention the storing means comprises a secure digital (SD) storage system 22 with an MP3 decoder 23. In this embodiment of the invention the SD storage system 22 is configured to receive one or more replaceable micro SD cards 24 with the selectable discrete signal trains stored thereon in the form of digital data. In this embodiment of the invention instead of cross-referencing the discrete digital data signals with unique identifier codes for facilitating selection of the discrete digital data signals, the discrete digital data signals are identified by the respective locations on the micro-SD card 24 at which the discrete digital data signals are stored. In other words, the locations on the micro-SD card 24 are numbered from location one upwards. The MP3 decoder 23 decodes the discrete digital data signals selected from the micro SD card 24 and produces an analogue signal for applying to the sounder 3 through the power amplifier 14 as already described with reference to the vehicle alarm system 2 of Fig. 1. However, in this embodiment of the invention the microprocessor 8 is configured to generate the pseudo-random numbers, instead of providing a separate pseudo-random number generator as in the case of the vehicle alarm system 2.

Additionally, in this embodiment of the invention the microprocessor 8 is configured to operate in three selectable modes for selecting the next discrete digital data signal to be applied to the sounder 3. In a first mode of operation of the microprocessor 8, the microprocessor 8 is configured so that on detecting the activation signal being indicative of, for example, a reverse gear being selected in the gearbox 4, the microprocessor 8 generates a pseudo-random number, and the discrete digital data signal, the location of which on the micro-SD card 24, corresponding to the generated random number is selected and applied to the sounder 3 through the MP3 decoder 23 and the amplifier 14.

In a second mode of operation the microprocessor 8 is configured so that on detecting the activation signal being indicative of, for example, a reverse gear being selected, the microprocessor 8 selects the next discrete digital data signal based on the order in which the discrete digital data signals are stored in the locations in the SD card 24.

In a third mode of operation of the microprocessor 8, the microprocessor 8 is configured to select the discrete digital data signals in a predefined order in response to detection of the activation signal being in the active state, as will be described below.

In this embodiment of the invention when the first mode of operation of the microprocessor 8 is selected, the microprocessor 8 reads signals from the sensor 11 for detecting either or both of the selection of a forward or reverse gear, a forward or reverse selecting switch of the vehicle, and from a proximity sensor 25 of the vehicle 21 for detecting the presence of an individual or an obstruction in or near the path of traverse of the vehicle. The sensor 11 on detecting the selection of a forward or reverse gear, activation of a forward or reverse gear, or movement of the vehicle, or the presence of an individual or an obstruction in or near the path of traverse of the vehicle, an activation signal is produced by either the sensor 11 or the proximity sensor 25, which is read by the microprocessor 8 as already described with reference to the vehicle alarm system 2 of Fig. 1, and thereafter when the microprocessor 8 is operating in the first mode of operation, the vehicle alarm system 20 and its operation is similar to the vehicle alarm system 2 described with reference to Fig. 1.

When the second mode of operation of the microprocessor 8 is selected, the microprocessor 8 reads the signals from the sensor 11 and from the proximity sensor 25, and on the microprocessor 8 detecting the activation signal from either the sensor 11 or the proximity sensor 25 becoming active, the microprocessor 8 selects the discrete digital data signal from the SD card 24 which is in the location on the SD card 24 which is next to the location from which the last one of the discrete digital data signals was selected, in the order in which the discrete digital data signals are stored on the SD card 24.

On the other hand, when the third mode of operation of the microprocessor 8 is selected, the microprocessor 8 selects the discrete digital data signals in a predefined order in response to each occurrence of the activation signal becoming active. Therefore, on the microprocessor 8 detecting the activation signal from the sensor 11 or the proximity sensor 25 becoming active, the microprocessor 8 selects the discrete digital data signal from the SD card 24 which is next in the predefined order to the previously selected discrete digital data signal from the SD card 24.

In this embodiment of the invention an interface 26 is provided to the microprocessor 8 of the vehicle alarm system 20 for facilitating input signals to the microprocessor 8. The interface 26 is configured to allow selection of the one of the three modes of operation of the microprocessor 8. The interface 26 is also configured to allow entry of the predefined order in which the discrete digital data signals are to be selected in the third mode of operation of the microprocessor 8 each time the activation signal from the sensor 11 or the proximity sensor 25 becomes active. The interface 26 is also configured to allow the volume of the sounder 3 to be selected.

Additionally, at any stage should it be desired to change the discrete digital data signals, the micro SD card 24 in the SD storage system 22 may be readily replaced with an alternative micro SD card with different selectable discrete digital data signals stored thereon.

Instead of repeatedly applying the same selected discrete digital data signal to the sounder during the period while the activation signal read from the sensor 11 or the proximity sensor 25 is active, it is envisaged that the microprocessor 8 may be operated for selecting a new discrete digital data signal from the memory 9 of the vehicle alarm system 2, or from the SD storage system 22 of the vehicle alarm system 20 so that instead of repeating the same sound while the activation signal remains active, different discrete digital data signals would be applied to the sounder 3 while the activation signal from the sensor 11 or the proximity sensor 20 remained active. In the case of the vehicle alarm system 2 each discrete digital data signal applied to the sounder 3 while the activation signal remained active would be randomly selected. In the case of the vehicle alarm system 20, the selection of the discrete digital data signals being applied to the sounder 3 while the activation signal remained active would be dependent on the mode of operation in which the microprocessor 8 is operating.

It is also envisaged that in the case of the vehicle alarm system 20, the microprocessor 8 may be configured to select different discrete digital data signals in response to the activation signal from the proximity sensor 25 becoming active to the discrete digital data signals which would be selected by the microprocessor 8 in response to the activation signal from the sensor 11 becoming active.

It is also envisaged that instead of deriving the activation signal from the gearbox of the vehicle, the activation signal may be derived, from, for example, the reversing light circuit of the vehicle.

It is also envisaged that the microprocessor may be configured in order to allow inputting of commands and other discrete digital data signals via Bluetooth.

It is also envisaged that where a proximity sensor is provided on the vehicle, the proximity sensor may be of the type, for example, a radar sensor or an FLIR sensor located to the rear and/or the front of the vehicle which would monitor for an individual or an object in the path of traverse of the vehicle or an individual or an object in close proximity to the path of traverse of the vehicle, and in such an embodiment of the invention the microprocessor would be responsive to a signal read from the proximity sensor being indicative of a person or object in or near the path of traverse of the vehicle, in order to activate the microprocessor 8 to operate the sounder 3 to produce an audible alarm signal in the manner already described. Needless to say, any other proximity sensor may be provided.

While the vehicle alarm systems 2 and 20 and the device 6 have been described as being configured to operate the sounder element in response to reversing of the vehicle, it is envisaged that the vehicle alarm system may also be configured for operating the sounder element of the vehicle in response to any movement of the vehicle, both forward and reversing movement, and in which case the vehicle alarm system according to the invention would be responsive to an activation signal derived from a signal indicative of any movement of the vehicle. For example, engagement of a forward gear or a reverse gear or activation of a forward switch or a reverse switch. It is also envisaged that the activation signal could be derived from a movement sensor, for example, an accelerometer. It will also be appreciated that where the vehicle is provided with a proximity sensor for detecting the presence of a person or object in or near the path of traverse of the vehicle, the proximity sensor or sensors, may be provided on both the front, rear and indeed on the sides of the vehicle in order to detect the presence of a person or object in the forward or rearward path of the vehicle, and near the sides of the vehicle or other vehicle, and in which case the activation signal may be derived from the proximity sensor.

While the vehicle alarm system and the device 6 have been described for use in a forklift truck, it will be readily apparent to those skilled in the art that the vehicle alarm system may be used in any type of truck, be in a forklift truck, a delivery truck, an articulated truck, a van, and even an automobile.

While the stored discrete data signals have been described as being of frequency and volume varying with respect to time in order to produce the respective different sound patterns when the respective different stored discrete data signals are applied to the sounder element, it will be readily apparent to those skilled in the art that any other arrangement of stored data signals may be used which when applied to a sounder element would produce alarm signal sounds of respective different sound patterns. For example, in some cases, it is envisaged that discrete digital data signals may be provided with the amplitude only of some or all of the respective stored discrete data signals varying with time to produce the alarm sounds of the different sound patterns, while in other cases, it is envisaged that the discrete digital data signals may be provided with only the frequency thereof varying with respect to time, to produce some of the alarm sounds of the different sound patterns.

While the number of stored discrete data signals for producing the different audible alarm sounds which are stored in the memory has been described as being two hundred discrete data signals, it will be readily apparent to those skilled in the art that any number of discrete data signals may be stored in the memory. Indeed, in certain embodiments of the invention it is envisaged that the number of selectable discrete digital data signals stored in memory or on the micro SD card may be greater or less than two hundred, and in some cases the number of discrete data signals stored could be greater than one thousand. Indeed, the number of discrete data signals which could be stored would be limited only by the available storage capacity of the storing means. It will also be appreciated that in some embodiments of the invention the discrete data signals may be stored in memory configured within the microprocessor, and it will also be appreciated that the random number generated could be configured within the microprocessor as in the vehicle alarm system 20, as could the digital-to-analogue converter be configured in the microprocessor.

It is envisaged that both the device and the vehicle alarm system may be provided to be retrofittable into a vehicle, or may be configured for installing in a vehicle during production of the vehicle.

It is also envisaged that as well as activating a sounder to produce different alarm sounds, it is envisaged that the vehicle alarm system may be configured to also produce a visual alarm signal simultaneously with the respective different alarm sounds. Such a visual alarm signal, typically would be an alternating type of visual signal, for example, the visual alarm signal may be provided by the activation of a strobe-light or by any other suitable alternating visual signal.

It is also envisaged that an interface means may be provided in the vehicle alarm system 2 of Fig. 1 for facilitating inputting of data into the microprocessor 8 of the visual alarm system 2. Such an interface may be configured with the microprocessor 8 to facilitate inputting new and different digital data signals which would produce different sounds when applied to the sounder than those which would be produced by those already stored in the storing means. It is also envisaged that the interface to the microprocessor 8 of the vehicle alarm system 2 may be configured to allow selection of the microprocessor 8 to operate in one or more different modes, if the microprocessor 8 of the vehicle alarm system 2 were so configured.

## Claims

1. A vehicle alarm system comprising a device (6) for operating a sounder (3) to produce a plurality of different alarm sounds, the device (6) comprising a means (9,22) to provide a plurality of selectable discrete signal trains configured for applying to the sounder (3) to operate the sounder (3) to produce respective different alarm sounds, each discrete signal train being configured so that when that discrete signal train is applied to the sounder (3), the sound pattern of the alarm sound produced by the sounder (3) is different to the sound patterns of the alarm sounds produced by the sounder (3) when the other ones of the respective discrete signal trains are applied to the sounder (3), a selector (8,10) configured to select the discrete signal trains for applying to the sounder (3), and a control means (8) responsive to each occurrence of an activation signal (11,25) derived from one of commencement of movement of the vehicle, engagement of a drive gear of the vehicle, activation of a drive switch of the vehicle, and detection of a person or object in or near the path of traverse of the vehicle, to operate the selector (8,10) to select the discrete signal trains, and to apply the selected discrete signal train to the sounder (3), **characterised in that** a storing means (9,22) stores the plurality of the selectable discrete signal trains in the form of selectable discrete data signals cross-referenced with respective unique identifier codes for facilitating selection of the respective discrete data signals, and the selector (8,10) is configured to select the discrete data signal from the storing means (9,22) to be applied to the sounder (3) in one of a predefined order and a random order.

2. A vehicle alarm system as claimed in Claim 1 **characterised in that** the control means (8) is configured to repeatedly apply the same discrete data signal to the sounder (3) while the activation signal (11,25) is in the active state.

3. A vehicle alarm system as claimed in Claim 1 **characterised in that** the control means (8) is configured to operate the selector (8,10) for sequentially selecting respective different ones of the discrete data signals for sequentially applying the selected discrete data signals to the sounder (3) in the selected order while the activation signal (11,25) is in the active state.

4. A vehicle alarm system as claimed in any preceding claim **characterised in that** the control means (8) is configured to time a pause of predefined time duration between the sequential application of the one or ones of the discrete data signals to the sounder (3) while the activation signal is in the active state.

5. A vehicle alarm system as claimed in Claim 4 **characterised in that** the predefined time duration of the pause lies in the range of 0.25 seconds to 2 seconds.

6. A vehicle alarm system as claimed in any preceding claim **characterised in that** each discrete data signal is configured to produce an alarm sound when applied to the sounder (3) of time duration lying in the range of 0.5 seconds to 5 seconds.

7. A vehicle alarm system as claimed in any preceding claim **characterised in that** at least ten discrete data signals are provided.

8. A vehicle alarm system as claimed in any preceding claim **characterised in that** at least one hundred discrete data signals are provided.

9. A vehicle alarm system as claimed in any preceding claim **characterised in that** a decoder (12,23) is provided for decoding the selectable discrete data signals, and to convert the selectable discrete data signals to analogue form for applying to the sounder (3).

10. A vehicle alarm system as claimed in any preceding claim **characterised in that** the device (6) comprises a monitoring means (11,25) for producing the activation signal.

11. A vehicle comprising the vehicle alarm system as claimed in any preceding claim.

12. A method for operating a sounder (3) of a vehicle alarm system to produce a plurality of different alarm sounds, the method comprising providing a means (9,22) to provide a plurality of selectable discrete signal trains configured for applying to the sounder (3) to operate the sounder (3) to produce respective different alarm sounds, each discrete signal train being configured so that when that discrete signal train is applied to the sounder (3), the sound pattern of the alarm sound produced by the sounder (3) is different to the sound patterns of the alarm sounds produced by the sounder (3) when the other ones of the respective discrete signal trains are applied to the sounder (3), selecting the discrete signal train from the plurality of the selectable discrete signal trains, and applying the selected discrete signal train to the sounder (3) in response to each occurrence of an activation signal (11,25) derived from one of commencement of movement of a vehicle, engagement of a drive gear of a vehicle, activation of a drive switch of a vehicle, and detection of a person or object in or near the path of traverse of the vehicle, **characterised in that**, the plurality of the selectable discrete signal trains are stored in a storing means (9,22) in the form of selectable discrete data signals cross-referenced with respective unique identifier codes for facilitating selection of the respective discrete data signals, and the discrete data signal to be applied to the sounder (3) is selected from the storing means (9,22) in one of a predefined order and a random order.

## Patentansprüche

1. Fahrzeugwarnsystem umfassend eine Vorrichtung (6) zum Betrieb eines Klanggerätes (3) zur Erzeugung einer Vielzahl verschiedener Warntöne, wobei die Vorrichtung (6) eine Einrichtung (9,22) zur Bereitstellung einer Vielzahl auswählbarer diskreter Signalfolgen umfasst, die dazu eingerichtet sind, an das Klanggerät (3) angelegt zu werden, um das Klanggerät (3) zu betreiben und jeweilige verschiedene Warntöne zu erzeugen, wobei jede diskrete Signalfolge derart eingerichtet ist, dass, wenn diese diskrete Signalfolge an das Klanggerät (3) angelegt ist, sich das Klangmuster des von dem Klanggerät (3) erzeugten Warntons von den Klangmustern der Warntöne unterscheidet, die von dem Klanggerät (3) erzeugt werden, wenn die anderen der jeweiligen diskreten Signalfolgen an das Klanggerät (3) angelegt sind, einen Selektor (8,10), der dazu eingerichtet ist, die diskreten Signalfolgen zum Anlegen an das Klanggerät (3) auszuwählen, und eine Steuereinrichtung (8), die auf jedes Auftreten eines Aktivierungssignals (11,25) reagiert, das von dem Beginn einer Bewegung des Fahrzeugs, dem Einlegen eines Ganges des Fahrzeugs, der Aktivierung eines Fahrschalters des Fahrzeugs oder der Erfassung einer Person oder eines Objekts im oder in der Nähe des Fahrweges des Fahrzeugs abgeleitet ist, um den Selektor (8,10) zu betreiben, um die diskreten Signalfolgen auszuwählen und die ausgewählte diskrete Signalfolge an das Klanggerät (3) anzulegen, **dadurch gekennzeichnet, dass** eine Speichereinrichtung (9,22) die Vielzahl der auswählbaren diskreten Signalfolgen in Form von auswählbaren diskreten Datensignalen speichert, die mit jeweiligen eindeutigen Identifizierungscodes als Querverweise versehen sind, um die Auswahl der jeweiligen diskreten Datensignale zu erleichtern, und der Selektor (8,10) dazu eingerichtet ist, das diskrete Datensignal, das an das Klanggerät (3) anzulegen ist, aus der Speichereinrichtung (9,22) in einer vordefinierten Reihenfolge oder in einer zufälligen Reihenfolge auszuwählen.

2. Fahrzeugwarnsystem nach Anspruch 1, **dadurch gekennzeichnet, dass** die Steuereinrichtung (8) dazu eingerichtet ist, wiederholt dasselbe diskrete Datensignal an das Klanggerät (3) anzulegen, während sich das Aktivierungssignal (11,25) im aktiven Zustand befindet.

3. Fahrzeugwarnsystem nach Anspruch 1, **dadurch gekennzeichnet, dass** die Steuereinrichtung (8) dazu eingerichtet ist, den Selektor (8,10) zum sequentiellen Auswählen jeweiliger unterschiedlicher diskreter Datensignale zu betreiben, um die ausgewählten diskreten Datensignale in der gewählten Reihenfolge sequentiell an das Klanggerät (3) anzulegen, während sich das Aktivierungssignal (11,25) im aktiven Zustand befindet.

4. Fahrzeugwarnsystem nach einem der vorhergehenden Ansprüche, **dadurch gekennzeichnet, dass** die Steuereinrichtung (8) dazu eingerichtet ist, eine Pause vordefinierter Zeitdauer zwischen dem sequentiellen Anlegen des einen oder der einzelnen diskreten Datensignale an das Klanggerät (3) zeitlich festzulegen, während sich das Aktivierungssignal im aktiven Zustand befindet.

5. Fahrzeugwarnsystem nach Anspruch 4, **dadurch gekennzeichnet, dass** die vordefinierte Zeitdauer der Pause im Bereich zwischen 0,25 Sekunden und 2 Sekunden liegt.

6. Fahrzeugwarnsystem nach einem der vorhergehenden Ansprüche, **dadurch gekennzeichnet, dass** jedes diskrete Datensignal dazu eingerichtet ist, einen Warnton von einer Zeitdauer im Bereich zwischen 0,5 Sekunden und 5 Sekunden zu erzeugen, wenn es an das Klanggerät (3) angelegt ist.

7. Fahrzeugwarnsystem nach einem der vorhergehenden Ansprüche, **dadurch gekennzeichnet, dass** wenigstens zehn diskrete Datensignale vorgesehen sind.

8. Fahrzeugwarnsystem nach einem der vorhergehenden Ansprüche, **dadurch gekennzeichnet, dass** wenigstens hundert diskrete Datensignale vorgesehen sind.

9. Fahrzeugwarnsystem nach einem der vorhergehenden Ansprüche, **dadurch gekennzeichnet, dass** ein Decoder (12,23) zum Dekodieren der auswählbaren diskreten Datensignale und zum Umwandeln der auswählbaren diskreten Datensignale in analoge Form zum Anlegen an das Klanggerät (3) vorgesehen ist.

10. Fahrzeugwarnsystem nach einem der vorhergehenden Ansprüche, **dadurch gekennzeichnet, dass** die Vorrichtung (6) eine Überwachungseinrichtung (11,25) zum Erzeugen des Aktivierungssignals umfasst.

11. Fahrzeug mit dem Fahrzeugwarnsystem nach einem der vorhergehenden Ansprüche.

12. Verfahren zum Betrieb eines Klanggerätes (3) eines Fahrzeugwarnsystems zur Erzeugung einer Vielzahl verschiedener Warntöne, wobei das Verfahren umfasst: Bereitstellen einer Einrichtung (9,22) zur Bereitstellung einer Vielzahl auswählbarer diskreter Signalfolgen, die dazu eingerichtet sind, an das Klanggerät (3) angelegt zu werden, um das Klanggerät (3) zu betreiben und jeweilige verschiedene Warntöne zu erzeugen, wobei jede diskrete Signalfolge derart eingerichtet ist, dass, wenn diese diskrete Signalfolge an das Klanggerät (3) angelegt ist, sich das Klangmuster des von dem Klanggerät (3) erzeugten Warntons von den Klangmustern der Warntöne unterscheidet, die von dem Klanggerät (3) erzeugt werden, wenn die anderen der jeweiligen diskreten Signalfolgen an das Klanggerät (3) angelegt sind, Auswählen der diskreten Signalfolgen aus der Vielzahl der auswählbaren diskreten Signalfolgen und Anlegen der ausgewählten diskreten Signalfolgen an das Klanggerät (3) als Reaktion auf jedes Auftreten eines Aktivierungssignals (11,25), das von dem Beginn einer Bewegung eines Fahrzeugs, dem Einlegen eines Ganges eines Fahrzeugs, der Aktivierung eines Fahrschalters eines Fahrzeugs oder der Erfassung einer Person oder eines Objekts im oder in der Nähe des Fahrweges des Fahrzeugs abgeleitet ist, **dadurch gekennzeichnet, dass** die Vielzahl der auswählbaren diskreten Signalfolgen in der Speichereinrichtung (9,22) in Form von auswählbaren diskreten Datensignalen gespeichert ist, die mit jeweiligen eindeutigen Identifizierungscodes als Querverweise versehen sind, um die Auswahl der jeweiligen diskreten Datensignale zu erleichtern, und das diskrete Datensignal, das an das Klanggerät (3) anzulegen ist, in einer vordefinierten Reihenfolge oder in einer zufälligen Reihenfolge aus der Speichereinrichtung (9,22) ausgewählt wird.

## Revendications

1. Système d'alarme pour véhicule comprenant un dispositif (6) pour commander une sirène (3) afin de produire une pluralité de sons d'alarme différents, le dispositif (6) comprenant un moyen (9,22) pour fournir une pluralité de trains de signaux discrets sélectionnables configurés pour être appliqués à la sirène (3) pour commander la sirène (3) d'émettre des sons d'alarme respectifs différents, chaque train de signaux discrets étant configuré pour que, lorsque ce train de signaux discrets est appliqué à la sirène (3), le modèle sonore du son d'alarme produit par la sirène (3) soit différent des modèles sonores des sons d'alarme produits par la sirène (3) lorsque les autres trains de signaux discrets respectifs sont appliqués à la sirène (3), un sélecteur (8, 10) configuré pour sélectionner les trains de signaux discrets à appliquer à la sirène (3), et un moyen de commande (8) réagissant à chaque occurrence d'un signal d'activation (11,25) dérivé de l'un des évènements suivants : début du mouvement du véhicule, engagement d'une vitesse d'entraînement du véhicule, activation d'un commutateur d'entraînement du véhicule, et détection d'une personne ou d'un objet dans ou à proximité de la trajectoire du véhicule, pour commander le sélecteur (8, 10) de sélectionner les trains de signaux discrets, et appliquer le train de signaux discrets sélectionné à la sirène (3), **caractérisé en ce qu'**un moyen de stockage (9,22) stocke la pluralité des trains de signaux discrets sélectionnables sous la forme de signaux de données discrets sélectionnables référencés par des codes d'identification uniques respectifs pour faciliter la sélection des signaux de données discrets respectifs, et **en ce que** le sélecteur (8, 10) est configuré pour sélectionner le signal discret de données à partir du moyen de stockage (9,22) à appliquer à la sirène (3) dans un ordre prédéfini ou dans un ordre aléatoire.

2. Système d'alarme pour véhicule selon la revendication 1, **caractérisé en ce que** le moyen de commande (8) est configuré pour appliquer de manière répétée le même signal discret de données à la sirène (3) lorsque le signal d'activation (11,25) est à l'état actif.

3. Système d'alarme pour véhicule selon la revendication 1, **caractérisé en ce que** le moyen de commande (8) est configuré pour actionner le sélecteur (8,10) afin de sélectionner séquentiellement différents signaux discrets de données pour appliquer séquentiellement les signaux discrets de données sélectionnés à l'avertisseur (3) dans l'ordre sélectionné pendant que le signal d'activation (11,25) est à l'état actif.

4. Système d'alarme pour véhicule selon l'une des revendications précédentes, **caractérisé en ce que** le moyen de commande (8) est configuré pour programmer une pause d'une durée prédéfinie entre l'application séquentielle de l'un ou de plusieurs des signaux discrets de données à la sirène (3) lorsque le signal d'activation est à l'état actif.

5. Système d'alarme pour véhicule selon la revendication 4, **caractérisé en ce que** la durée prédéfinie de la pause est comprise entre 0,25 seconde et 2 secondes.

6. Système d'alarme pour véhicule selon l'une des revendications précédentes, **caractérisé en ce que** chaque signal discret de données est configuré pour produire un son d'alarme lorsqu'il est appliqué à la sirène (3) pendant une durée comprise entre 0,5 seconde et 5 secondes.

7. Système d'alarme pour véhicule selon l'une des revendications précédentes, **caractérisé en ce qu'**au moins dix signaux discrets de données sont fournis.

8. Système d'alarme pour véhicule selon l'une quelconque des revendications précédentes, **caractérisé en ce qu'**au moins cent signaux discrets de données sont fournis.

9. Système d'alarme pour véhicule selon l'une quelconque des revendications précédentes, caractérisé en qu'un décodeur (12,23) est prévu pour décoder les signaux discrets de données sélectionnables et pour convertir les signaux discrets de données sélectionnables en signaux analogiques à appliquer à la sirène (3).

10. Système d'alarme pour véhicule selon l'une quelconque des revendications précédentes, **caractérisé en ce que** le dispositif (6) comprend un moyen de contrôle (11,25) pour produire le signal d'activation.

11. Véhicule comprenant le système d'alarme pour véhicule selon l'une quelconque des revendications précédentes.

12. Méthode pour commander une sirène (3) d'un système d'alarme de véhicule afin de produire une pluralité de sons d'alarme différents, la méthode comprenant la fourniture d'un moyen (9,22) pour fournir une pluralité de trains de signaux discrets sélectionnables configurés pour être appliqués à la sirène (3) pour commander la sirène (3) d'émettre des sons d'alarme respectifs différents (3), chaque train de signaux discrets étant configuré de sorte que lorsque ce train de signaux discrets est appliqué à l'avertisseur (3), le modèle sonore du son d'alarme produit par la sirène (3) est différent des modèles sonores des sons d'alarme produits par la sirène (3) lorsque les autres trains de signaux discrets respectifs sont appliqués à la sirène (3), en sélectionnant le train de signaux discrets dans la pluralité des trains de signaux discrets sélectionnables, et en appliquant le train de signaux discrets sélectionné à la sirène (3) en réponse à chaque occurrence d'un signal d'activation (11,25) dérivé de l'un des événements suivants : début du mouvement d'un véhicule, engagement d'une vitesse d'entraînement d'un véhicule, activation d'un commutateur d'entraînement d'un véhicule et détection d'une personne ou d'un objet dans ou à proximité de la trajectoire de déplacement du véhicule, **caractérisé en ce que** la pluralité des trains de signaux discrets sélectionnables est stockée dans un moyen de stockage (9,22) sous la forme de signaux discrets de données sélectionnables référencés par des codes d'identification uniques respectifs pour faciliter la sélection des signaux discrets de données respectifs, et **en ce que** le signal discret de données à appliquer à la sirène (3) est sélectionné dans le moyen de stockage (9,22) dans un ordre prédéfini ou dans un ordre aléatoire.
